# EUROPEAN PATENT SPECIFICATION

(11) **EP 2 075 149 B1**
(45) Date of publication and mention of the grant of the patent: **10.11.2010**
(21) Application number: 09155577.1
(22) Date of filing: 24.07.2007
(51) Int. Cl.: B60J 7/06

(54) **Actuating system for a covering canvas, in particular for lorry containers or stationary containers**
Betätigungssystem für eine Abdeckleinwand, insbesondere für einen LKW-Behälter oder stationäre Behälter
Système d'actionnement pour un canevas de revêtement, en particulier pour conteneurs de camions ou conteneurs stationnaires

(30) Priority: 24.07.2006 IT TV20060133
(43) Date of publication of application: 01.07.2009
(62) Divisional of application: 07113042.1
(73) Proprietor: Marcolin S.r.l., 33170 Pordenone (IT)
(72) Inventor: Davide, Amato, 33070, MARON DI BRUGNERA- (PORDENONE) (IT)
(74) Representative: Feltrinelli, Secondo Andrea

(56) References cited:
- EP-A- 1 529 671
- CA-A1- 2 515 656
- DE-A1- 10 133 016

## Description

The present invention concerns system for a covering canvas, in particular for lorry containers or stationary containers.

It Is known that after purchase the uncovered containers of lorry containers or stationary containers for containing excavation waste are very often equipped with a covering canvas. The canvas is supported by transversal ribs that run along the edges of the container hauled by a system of cables. The sliding ribs allow the canvas to be closed (container covered by the canvas) or opened (canvas and ribs packed on the side of the container opposite the rear door). Examples of these devices with a canvas are described In US 5,145,230 , US 5,253,914 , US 6,435,595 , WO96/33882 and EP1228912.

Substantially these devices can be divided into 2 groups: i) those with a through shaft with two cable loops or ii) those with a single cable. In the first support brackets (or means) for a drive shaft are arranged on the short side of the container, close to the driver's cab, said drive shaft actuating a drive pulley at each of its ends to move in total two cable loops that run along the long sides of the container. In the second, on the other hand, a single cable ring is used, sending it all around the container with return pulleys and crossing them overin at least one point to obtain two portions of cable that run In the same direction. In both cases two portions of cable with movement in the same direction are obtained to which the feet of the ribs are fixed.

EP 1 529 671, which corresponds to the preamble of claim 1, discloses an actuating system for a canvas for covering containers of vehicles.
The canvas is hauled by one or more cable loops set in motion by drive pulleys that transfer to them the motion necessary to move the canvas.
DE 101 33 016 discloses a bellows-like frame adapted to fold the canvas of a lorry.

The present invention has the main object of making system for a covering canvas that is an optional structure to fold the canvas.

Such an object is obtained with system for a covering canvas for containers of vehicles or fixed containers for waste materials as claimed in claim 1.

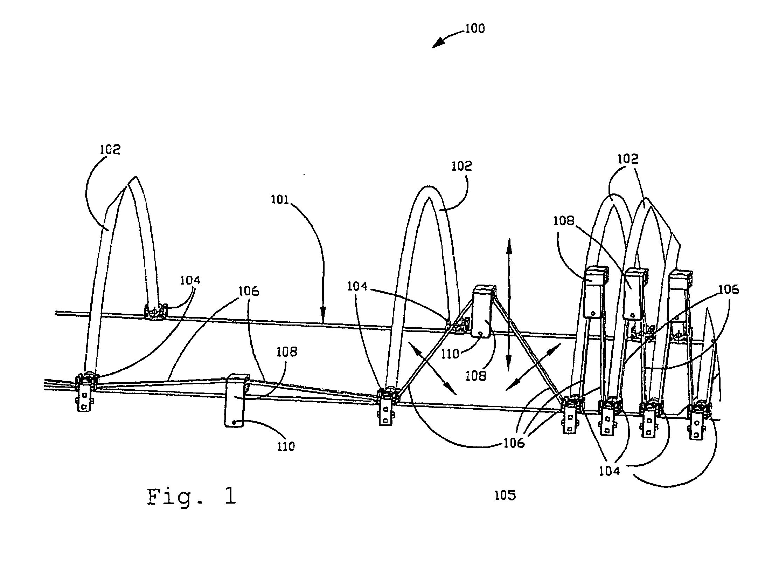

Fig. 1 shows the essentials of an optional structure 100 able to fold the canvas. Said structure 100 may be used in any of the variants described. The structure 100 comprises a set 105 of arched ribs 102 adapted to support a canvas (not shown) and to side on the edge 101 of a container (non shown). The sliding motion is facilitated by silding blocks 104 provided at the two feet of each rib 102.

Each block 104, made preferably in anti-friction material and/or provided with rolling means to slide with smoothness, is adapted to hingedly connect the end of two arms 106, one for each side of the block. In fig. 9 for the sake of clarity only arms on one side o! the container are shown. As shown, between two ribs 102 there are four arms 106, two per side of the containers.

On the other end, each arm 106 is hingedly connected to a bracket 108, preferably 1. shaped, having on its bottom portion a through-hole 110 (or other fixing means for the canvas).

The pivoting connection between a bracket 108, four arms 106 linked thereto and four blocks 104 creates a bellows-like frame en which the canvas may be fixed. In particular the canvas is fixed on the bracked 108 exploiting the hole 110 and prosper known fixing means.

When the ribs 102. are brought in extended configuration along the whole edge 101 (see the left portion in fig. 9), the canvas is stretched and tight to cover the container, preventing accidental lifting and avoiding any other fixing means (i.e. ropes or elastic bands).

When instead the ribs 102 arc in compact configuration (see the right portion in fig. 9), the canvas folds over, and by the trust of, the bracket 106, which gets lifted upwards by the closing arms 106 (see double arrow in fig. 9). Note how the arms 106 in the open position are always slightly inclined with respect to the edge 101, in order to prevent jamming or clogging. The folded canvas remains compact, perfectly tight and tidily packed.

Of course, the first and last rib 102 in the set 105 will have only two arms 106 connected thereto.

## Claims

1. Actuating system for a canvas for covering containers of vehicles or fixed containers for waste materials, the canvas being hauled by one or more cable loops set in motion by drive pulleys that transfer to them the motion necessary to move the canvas, further comprising a bellows-like frame adapted to fold the canvas,
**CHARACTERIZED IN THAT**
said frame comprises a set (105) of arched ribs (102) adapted to support a canvas and to slide on the edge (101) of a container by means of a sliding block (104) adapted to hingedly connect the end of two arms (106), one for each side of the block, on the other end of each arm (106) being hingedly connected a bracket (108) having on its bottom portion fixing means for the canvas.

2. Actuating system according to claim 1, wherein each block (104) is made in anti-friction material.

3. Actuating system according to claim 1 or 2, wherein each block (104) is provided with rolling means to slide with smoothness.

4. Actuating system according to any of claims 1 to 3, wherein each bracket (108) is L-shaped.

5. Actuating system according to any of claims 1 to 4, wherein each bracket (108) has on its bottom portion a through-hole (110) as fixing means for the canvas.

6. Actuating system according to any of preceding claims, wherein the first and last rib (102) in the set (105) have only two arms (106) connected thereto.

## Patentansprüche

1. Betätigungssystem für eine Plane zum Abdecken von Behältern von Fahrzeugen oder von ortsfesten Behältern für Abfallmaterialien, wobei die Plane von einer oder mehreren Seilschleifen geschleppt wird, die durch Antriebsscheiben in Bewegung versetzt werden, die auf diese die zum Bewegen der Plane erforderliche Bewegung übertragen, ferner umfassend einen balgartigen Rahmen, der sich zum Falten der Plane eignet,
**DADURCH GEKENNZEICHNET, DASS**
der Rahmen eine Reihe (105) von gebogenen Rippen (102) umfasst, die dazu geeignet sind, eine Plane zu tragen und auf dem Rand (101) eines Behälters mit Hilfe eines Gleitblocks (104) zu gleiten, der sich dazu eignet, das Ende von zwei Armen (106), einen für jede Seite des Blocks, gelenkig anzuschließen, wobei an das andere Ende jeden Arms (106) ein Halter (108) gelenkig angeschlossen ist, der an seinem unteren Abschnitt Befestigungsmittel für die Plane aufweist.

2. Betätigungssystem nach Anspruch 1, bei dem jeder Block (104) aus einem Antifriktionsmaterial besteht.

3. Betätigungssystem nach Anspruch 1 oder 2, bei dem jeder Block (104) mit Wälzmitteln versehen ist, um sanft zu gleiten.

4. Betätigungssystem nach einem der Ansprüche 1 bis 3, bei dem jeder Halter (108) L-förmig ist.

5. Betätigungssystem nach einem der Ansprüche 1 bis 4, bei dem jeder Halter (108) in seinem unteren Abschnitt ein Durchgangsloch (110) als Befestigungsmittel für die Plane aufweist.

6. Betätigungssystem nach einem der vorherigen Ansprüche, bei dem die erste und die letzte Rippe (102) in der Reihe (105) nur zwei daran angeschlossene Arme (106) aufweisen.

## Revendications

1. Système d'actionnement pour une toile pour couvrir des containers de véhicules ou des containers fixes pour des déchets, la toile étant tractée par un ou plusieurs câbles en boucle entraînés par des poulies motrices qui leur transmettent le mouvement nécessaire pour déplacer la toile, comprenant en outre un châssis en forme de soufflet adapté pour plier la toile, **caractérisé en ce que** ledit châssis comprend un ensemble (105) de nervures arquées (102) adaptées pour supporter une toile et pour coulisser sur le bord (101) d'un container au moyen d'un bloc de coulissement (104) adapté pour connecter de manière articulée l'extrémité de deux bras (106), un de chaque côté du bloc, sur l'autre extrémité de chaque bras (106) étant connectée de manière articulée une patte d'attache (108) comportant des moyens de fixation pour la toile dans sa partie inférieure.

2. Système d'actionnement selon la revendication 1, dans lequel chaque bloc (104) est réalisé en matériau antifriction.

3. Système d'actionnement selon la revendication 1 or 2, dans lequel chaque bloc (104) est muni de moyens de roulement pour coulisser en douceur.

4. Système d'actionnement selon l'une quelconque des revendications 1 à 3, dans lequel chaque patte d'attache (108) est en forme de L.

5. Système d'actionnement selon l'une quelconque des revendications 1 à 4, dans lequel chaque patte d'attache (108) présente dans sa partie inférieure un trou traversant (110) comme moyen de fixation pour la toile.

6. Système d'actionnement selon l'une quelconque des revendications précédentes, dans lequel la première et la dernière nervures (102) dans l'ensemble (105) comportent seulement deux bras (106) connectés à celles-ci.
